# EUROPÄISCHE PATENTSCHRIFT

(11) **EP 1 277 561 B1**
(45) Veröffentlichungstag und Bekanntmachung des Hinweises auf die Patenterteilung: **04.01.2006**
(21) Anmeldenummer: 01117250.9
(22) Anmeldetag: 17.07.2001
(51) Int. Cl.: B29C 47/68, B01D 35/12, B23P 19/04

(54) **Verfahren zum Lösen bzw. Einbringen eines Bolzens bei einem Siebwechsler und Vorrichtung zur Durchführung der Verfahren**
Method and apparatus for removing and inserting the slide bars of a screen changer
Procédé et dispositif de désengagement et d'insertion d'une barre d'un changeur de filtre

(43) Veröffentlichungstag der Anmeldung: 22.01.2003
(73) Patentinhaber: Maag Pump Systems Textron AG, 8154 Oberglatt (CH)
(72) Erfinder: Pokladek, Thomas, 40885 Ratingen-Lintorf (DE)
(74) Vertreter: Troesch Scheidegger Werner AG

(56) Entgegenhaltungen:
- DE-A- 4 317 543
- DE-A- 4 407 941
- US-A- 5 840 197
- KOCHING H: "FOLIEN/FASERN - VERDICHTEN SCHMELZE - FILTRIERUNG" KUNSTSTOFFBERATER, KUNSTSTOFF VERLAG. ISERNHAGEN, DE, Bd. 37, Nr. 5, 1. Mai 1992 (1992-05-01), Seiten 42-45, XP000293718 ISSN: 0172-6374

## Beschreibung

Die vorliegende Erfindung betrifft einerseits ein Verfahren zum Lösen von in einer Ausnehmung eines Gehäuses festsitzenden Bolzen, anderseits ein Verfahren zum Einbringen eines Bolzens in eine Ausnehmung eines Gehäuses sowie Vorrichtungen zur Durchführung der Verfahren.

Siebwechsler enthalten Filterelemente, um Fördermedien vor der Weiterverarbeitung zu Filtern, wobei insbesondere in der industriellen Fertigung es von grösster Bedeutung ist, dass verschmutzte Filter ohne aufwendige Demontagearbeiten und damit mit möglichst kurzen Produktionsunterbrüchen, im Idealfall sogar während der Produktion und damit ohne Produktionsunterbruch gewechselt werden können. Es wurden daher Siebwechsler entwickelt, bei denen Filterelemente in Bolzen eingebaut sind, die quer zur Flussrichtung des zu filternden Fördermediums angeordnet sind. Entsprechend bestehen die Siebwechsler aus einem Gehäuse mit Transportkanälen für das Fördermedium und aus einer oder mehreren Ausnehmungen zur Aufnahme der Bolzen. Die Transportkanäle sind dabei derart in bezug auf die Ausnehmung angeordnet, dass das Fördermedium durch den Filter geleitet wird, wenn der mit dem Filter bestückte Bolzen in die Ausnehmung eingeschoben ist.

Ein derartiger Siebwechsler ist beispielsweise in DE-44 07 941 A1 beschrieben. Der bekannte Siebwechsler weist zwei Bolzen auf, die je von Heizelementen umgeben sind. Die Heizelemente dienen zur Einstellung einer konstanten vorgebbaren Temperatur während dem normalen Betrieb der Vorrichtung. Der eingestellt Temperaturwert entspricht dabei einer optimalen Verarbeitungstemperatur des Fördermediums. Des Weiteren sind die Heizelement nach aussen hin isoliert, damit ein hoher Heizwirkungsgrad erzielt wird.

Damit bei diesem bekannten Siebwechsler eine ausreichende Abdichtung zwischen dem Bolzen und dem Gehäuse vorhanden ist, werden die Abmessungen von Bolzen und Ausnehmungen so gewählt, dass die Bolzen bei Raumtemperatur bzw. Montagetemperatur gerade noch in die jeweiligen Ausnehmungen eingeschoben werden können.

Es hat sich gezeigt, dass trotz der vorstehend erwähnten Wahl der Abmessungen für die Bolzen und für die Ausnehmungen ein Filterwechsel wegen in den Ausnehmungen festsitzenden Bolzen nicht immer möglich ist. So kann eine übermässige Belastung zwischen Bolzen und Gehäuse dazu führen, dass die Bolzen mit bereitgestellten Bolzenverschiebungsvorrichtungen, wie beispielsweise hydraulisch betriebenen Zylindern, nicht mehr aus den Ausnehmungen geschoben werden können. Des weiteren wurde festgestellt, dass sich häufig degradiertes Fördermedium im Bereich der Dichtstellen, d.h. zwischen Bolzen und Ausnehmung, ablagern, so dass sich die Bolzen auch bei erhöhtem Auspressdruck nicht mehr aus den Ausnehmungen entfernen lassen. Insbesondere bei der Verwendung von Polymeren als Fördermedium hat sich gezeigt, dass ein Festsitzen der Bolzen in den Ausnehmungen die Folge einer Degradation ist.

Ein festsitzender Siebwechslerbolzen hat zur Folge, dass der Filter nicht mehr ausgewechselt werden kann und dass in der Folge die Gefahr besteht, dass der Druckabfall über dem Filter mit zunehmender Verschmutzung unzulässig hoch wird, so dass der verbleibende Druck nach dem Filter für eine Weiterverarbeitung des Fördermediums nicht mehr ausreicht. Als Folge davon ist die Anlage abzuschalten, und es sind die Bolzen unter Anwendung von grosser Kraft aus den Ausnehmungen auszupressen, wozu der ganze Siebwechsler auszubauen ist. Neben einem erheblichen Aufwand und den hieraus resultierenden entsprechend hohen Kosten führt der Ausbau und Ersatz des Siebwechslers zu einem unerwünschten Produktionsunterbruch, was zu erhöhten Produktionskosten führt.

Der vorliegenden Erfindung liegt daher die Aufgabe zugrunde, ein Verfahren bzw. eine Vorrichtung anzugeben, bei dessen Anwendung die vorstehend genannten Nachteile eliminiert sind.

Diese Aufgabe wird je durch die in den Ansprüchen 1, 2 und 6 angegebenen Massnahmen gelöst. Vorteilhafte Ausgestaltungen der Erfindung sind in weiteren Ansprüchen angegeben.

Die Erfindung weist die folgenden Vorteile auf: Indem Wärme in einem äusseren Bereich des Siebwechslergehäuses zugeführt wird, wird das Spiel zwischen Bolzen und Ausnehmung vergrössert. Als Folge davon kann der Bolzen unter Verwendung von reduzierten Auspresskräften aus der Ausnehmung entfernt werden, auch wenn sich der Bolzen beispielsweise durch Degradation von Fördermedium festgesetzt hat.

Die Erfindung wird nachfolgend anhand von Zeichnungen beispielsweise näher erläutert. Dabei zeigt:
- Fig. 1: eine perspektivische Darstellung eines erfindungsgemässen Siebwechslers,
- Fig. 2: einen Schnitt durch den erfindungsgemässen Siebwechsler entlang der in Fig. 1 angegebenen Schnittebene S,
- Fig. 3: einen Schnitt gemäss Fig. 2 durch eine weitere Ausführungsform der Erfindung mit Heizpatronen,
- Fig. 4: einen Schnitt gemäss Fig. 2 durch eine weitere Ausführungsform der Erfindung mit Heizplatten und
- Fig. 5: einen Schnitt gemäss Fig. 2 durch eine weitere Ausführungsform der Erfindung mit einem Heizband.

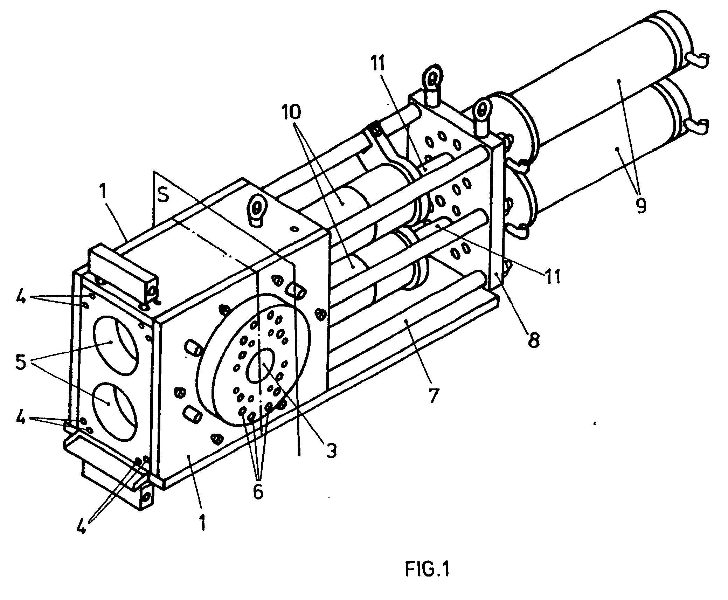

In Fig. 1 ist ein erfindungsgemässer Siebwechsler in perspektivischer Darstellung gezeigt. In einem Siebwechslergehäuse 1, durch das ein Transportkanal 3 geführt ist, sind zwei Ausnehmungen 5 vorgesehen, welche im wesentlichen quer zum Transportkanal 3 angeordnet sind. In die Ausnehmungen 5 ist je ein Bolzen 10 aufnehmbar, in denen je ein Filter (in Fig. 1 nicht dargestellt) derart enthalten ist, dass bei vollständig in die Ausnehmungen 5 eingeschobenen Bolzen 10 ein durch den Transportkanal 3 geleitetes Fördermedium im Filter, der im Bolzen 10 eingelassen ist, gefiltert wird.

Zum Bewegen der Bolzen 10 im Siebwechslergehäuse 1, d.h. zum Einschieben und Herausnehmen, sind an einer Platte 8 befestigte Hydraulikzylinder 9 vorgesehen, die mit einer Hydraulikpumpe (nicht dargestellt) verbunden sind. Die Platte 8 ist über mehrere Distanzstäbe 7 mit dem Siebwechslergehäuse 1 fest verbunden. Ein mittels des Hydraulikzylinders 9 verschiebbares Gestänge 11 ist durch eine in der Platte 8 enthaltene Bohrung hindurchgeführt und mit je einem der Bolzen 10 wirkverbunden.

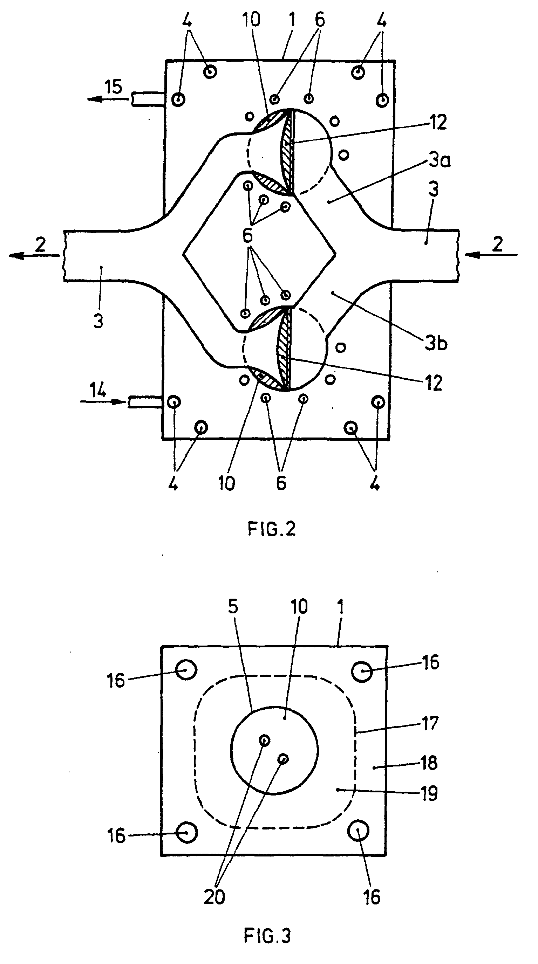

Fig. 2 zeigt einen Schnitt durch das Siebwechslergehäuse 1 entlang der in Fig. 1 dargestellten Schnittebene S. Deutlich erkennbar ist der Verlauf des Transportkanals 3, in dem Fördermedium entsprechend der mit einem Pfeil 2 angegebenen Richtung transportiert wird.

Bei dem in Fig. 2 dargestellten Siebwechsler sind, wie schon bei der Beschreibung von Fig. 1 erläutert worden ist, zwei Bolzen 10 mit je einem Filter 12 vorgesehen. Dabei ist der Transportkanal 3 im Siebwechslergehäuse 1 in zwei Kanalzweige 3a und 3b aufgeteilt, die jede für sich Fördermedium zu einem der Filter 12 leiten. Nach den Filtern 12 werden die beiden Kanalzweige 3a und 3b noch im Siebwechslergehäuse 1 wiederum zu einem Transportkanal 3 zusammengeführt. Durch die Aufteilung in zwei Kanalzweige 3a und 3b besteht die Möglichkeit, einen Filterwechsel während des Betriebs vornehmen zu können, d.h. ohne den Fördermediumstrom zu unterbrechen. Dies wird dadurch ermöglicht, dass der ganze Fördermediumstrom durch einen der Kanalzweige 3a oder 3b geleitet wird. Der Fördermediumstrom durch den jeweils anderen Kanalzweig 3b oder 3a wird durch Herauspressen des betreffenden Bolzens 10 unterbrochen, wobei der Filter 12 in diesem Bolzen 10 in der Folge entfernt bzw. gereinigt werden kann.

Damit auch ein beispielsweise durch Degradation von Fördermedium festsitzender Bolzen 10 mit dem zur Verfügung stehenden Hydraulikzylinder 9 aus dem Siebwechslergehäuse 1 herausgepresst werden kann, ist erfindungsgemäss ein erstes Kanalsystem 4 vorgesehen, das gemäss Fig. 2 aus Bohrungen durch das Siebwechslergehäuse 1 besteht, welche vorzugsweise parallel zu den Achsen der Bolzen 10 verlaufen und welche in einem äusseren Bereich des Siebwechslergehäuses 1 angeordnet sind. Stirnseitig sind die parallelen Bohrungen zum ersten Kanalsystem 4 zusammengeführt, das über eine Einlassöffnung 14 mit einem Temperiermedium versorgt wird, welches über eine Auslassöffnung 15 wiederum einem Temperieraggregat (nicht dargestellt) zur Aufbereitung wiederum zugeführt wird.

Wird nun festgestellt, dass ein Bolzen 10 in einer Ausnehmung 5 festsitzt, so wird im erwähnten äusseren Bereich des Siebwechslergehäuses 1 Wärme über das erste Kanalsystem 4 zugeführt, was zur Folge hat, dass die Ausnehmungen 5 entsprechend dem Wärmeausdehnungskoeffizient des verwendeten Materials für das Siebwechslergehäuses 1 vergrössert werden. Damit wird erfindungsgemäss die Möglichkeit geschaffen, dass der bzw. erforderlichenfalls die Bolzen 10 mit Hilfe des vorhandenen Hydraulikzylinders 9 aus der bzw. den Ausnehmungen 5 gepresst werden können.

Es wird darauf hingewiesen, dass das erste Kanalsystem 4 nicht zwingend dauernd mit einem Temperiermedium gefüllt bzw. mit einem Temperieraggregat verbunden ist. Denkbar ist auch, dass das erste Kanalsystem 4 erst dann in Betrieb genommen, d.h. mit einem Temperieraggregat verbunden und mit einem Temperiermedium gefüllt wird, wenn ein Festsitzen eines Bolzens 10 festgestellt worden ist.

In den Figuren 1 und 2 sind eine Reihe von weiteren Bohrungen dargestellt, welche zu mindestens einem weiteren Kanalsystem, im folgenden als zweites Kanalsystem 6 bezeichnet, gehören. Während die Bohrungen gemäss Fig. 1 parallel und konzentrisch zur Längsachse der Transportkanäle 3 angeordnet sind, verlaufen die in Fig. 2 dargestellten Bohrungen parallel zur Längsachse der Bolzen 10 bzw. der Ausnehmungen 5, wobei es nicht unbedingt erforderlich ist, dass die an und für sich im wesentlichen senkrecht verlaufenden Bohrungen zu ein und demselben Kreislauf gehören. Denkbar ist auch, dass zwei verschiedene Kreisläufe vorgesehen sind. Bei der Erwähnung des zweiten Kanalsystems 6 werden in der Folge immer beide Varianten verstanden.

Es wird darauf hingewiesen, dass das mit einem weiteren Temperieraggregat (nicht dargestellt) verbundene zweite Kanalsystem 6 im normalen Betrieb des Siebwechslers verwendet wird, wobei mit Hilfe des zweiten Kanalsystems 6 eine für das Fördermedium ideale Temperatur eingestellt wird. Um eine gleichmässige Temperaturverteilung zu erzielen, ist es wünschenswert, dass sich zumindest ein wesentlicher Teil des zweiten Kanalsystems 6 in der näheren Umgebung des Transportkanals 3 bzw. des Bolzens 10 befindet.

In Fig. 3 ist schematisch eine weitere Ausführungsvariante der Erfindung, wiederum in einem Schnitt entsprechend Fig. 2, dargestellt. Bei dieser Ausführungsvariante ist lediglich ein in eine Ausnehmung 5 einschiebbarer Bolzen 10 vorgesehen. Anstelle des ersten Kanalsystems 4 (Fig. 2) sind nunmehr Heizpatronen 16 als Heizeinheiten innerhalb eines äusseren Bereichs 18 des Siebwechslergehäuses 1 angeordnet. Wie anhand von Fig. 2 erläutert worden ist, wird im äusseren Bereich 18, mithin mittels der Heizpatronen 16 Wärme zugeführt, um einen festsitzenden Bolzen 10 mit reduzierter Kraft aus der Ausnehmung 5 zu pressen.

Um den Bolzen 10 erforderlichenfalls weiter lösen zu können, d.h. wenn die Heizpatronen 16 zum Lösen des Bolzens 10 nicht ausreicht, ist gemäss einer weiteren Ausführungsform der Erfindung vorgesehen, den Bolzen 10 in dessen mittigen Längsachse zu kühlen. Hierzu wird vorgeschlagen, eine Kühleinheit 20 vorzusehen, welche beispielsweise in einem weiteren Kanalsystem 20 besteht, durch das ein weiteres Temperiermedium fliesst. Denkbar ist auch, anstelle des weiteren Kanalsystems 20 auch im Bolzen 10 eine Heizpatrone vorzusehen.

Es wird ausdrücklich darauf hingewiesen, dass die Heizpatronen 16 (Fig. 3) bzw. das erste Kanalsystem 4 (Fig. 2) innerhalb des äusseren Bereichs 18 des Siebwechslergehäuses 1 angeordnet ist. Der äussere Bereich 18 des Siebwechslergehäuses 1 ist dabei einerseits durch dessen Oberfläche, anderseits durch eine Begrenzungsfläche 17 begrenzt, welche mittig zwischen der Oberfläche des Siebwechslergehäuses 1 und einer Wandung der Ausnehmung 5 verläuft. Dementsprechend ist es nicht unbedingt erforderlich, dass das erste Kanalsystem 4 (Fig. 2) und die Heizpatronen 16 (Fig. 3) in den Eckbereichen des Siebwechslergehäuses 1 angeordnet sind. Wesentlich für ein gutes Funktionieren der Erfindung ist lediglich, dass die Heizeinheit 16 bzw. das erste Kanalsystem 4 grösstenteils innerhalb des äusseren Bereichs 18 angeordnet sind.

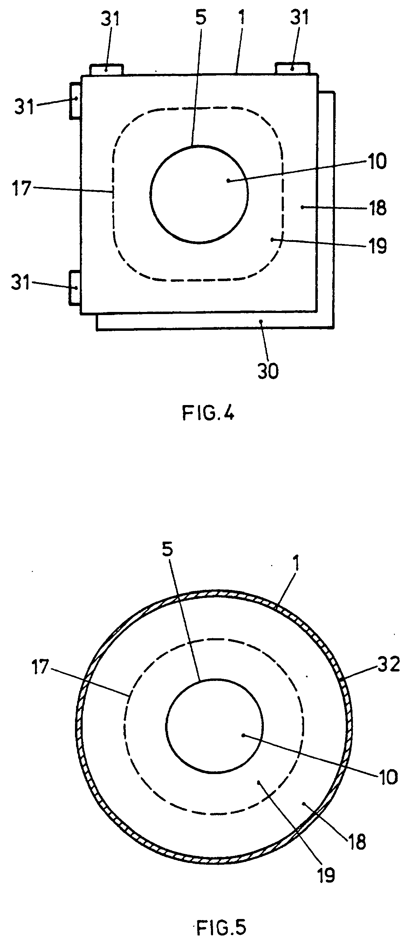

In Fig. 4 ist eine weitere Ausführungsform der Erfindung dargestellt, bei der Heizplatten 30, 31 als Heizeinheiten vorgesehen sind, die nicht mehr innerhalb des äusseren Bereichs 18 angeordnet sind, sondern von aussen auf den äusseren Bereich 18 einwirken. Die Heizplatten 30, 31 können dabei beispielsweise lediglich in den Eckbereichen des Siebwechslergehäuses 1 (Hinweiszeichen 30) oder das Siebwechslergehäuse 1 in grösseren Bereichen (Hinweiszeichen 31) oder auch ganz umfassen. In Fig. 4 sind die beiden erstgenannten Varianten in Kombination dargestellt.

In Fig. 5 ist eine weitere Ausführungsform der Erfindung dargestellt, bei der Heizbänder 32 als Heizeinheiten eingesetzt werden. Bei dieser Ausführungsvariante ist es von Vorteil, hingegen nicht zwingend, dass das Siebwechslergehäuse 1 - wie in Fig. 5 dargestellt - einen runden Querschnitt aufweist. Auch bei dieser Ausführungsvariante wirkt das Heizband 32 auf den äusseren Bereich 18 ein.

Es ist vorgesehen, dass auch die in den Figuren 4 und 5 dargestellten Ausführungsvarianten mindestens einen Bolzen 10 aufweisen können, der mit Hilfe einer vorzugsweise mittig angeordneten Kühleinheit ausgestattet ist.

## Patentansprüche

1. Verfahren zum Lösen von einem in einer Ausnehmung (5) eines Siebwechslergehäuses (1) festsitzenden Bolzen (10), wobei das Verfahren darin besteht, dass durch ein momentanes Zuführen von Wärme in einen äusseren Bereich (18) des Siebwechslergehäuses (1) der Bolzen (10) gelöst wird, wobei der äussere Bereich (18) des Siebwechslergehäuses (1) einerseits durch dessen Oberfläche, anderseits durch eine Begrenzungsfläche (17) begrenzt wird, welche mittig zwischen der Oberfläche des Siebwechslergehäuses (1) und einer Wandung der Ausnehmung (5) verläuft.

2. Verfahren zum Einbringen eines Bolzens (10) in eine Ausnehmung (5) eines Siebwechslergehäuses (1), wobei das Verfahren darin besteht, dass durch ein momentanes Zuführen von Wärme in einen äusseren Bereich (18) des Siebwechslergehäuses (1) der Bolzen (10) in die Ausnehmung (5) eingebracht wird, wobei der äussere Bereich (18) des Siebwechslergehäuses (1) einerseits durch dessen äussere Oberfläche, anderseits durch eine Begrenzungsfläche (17) begrenzt wird, welche mittig zwischen der äusseren Oberfläche des Siebwechslergehäuses (1) und einer Wandung der Ausnehmung (5) verläuft.

3. Verfahren nach einem der Ansprüche 1 bis 2, **dadurch gekennzeichnet, dass** die Wärmezufuhr mit Hilfe eines Temperiermediums, das durch ein im äusseren Bereich (18) vorhandenes Kanalsystem (4) geleitet wird, oder mit Hilfe von im äusseren Bereich (18) angeordneten Heizeinheiten (16), beispielsweise bestehend aus Heizpatronen, erfolgt.

4. Verfahren nach einem der Ansprüche 1 bis 2, **dadurch gekennzeichnet, dass** die Wärmezufuhr mit Hilfe von ausserhalb des äusseren Bereichs (18) und ausserhalb des Siebwechslergehäuses (1) angeordneten Heizeinheiten (30, 31, 32), beispielsweise bestehend aus Heizplatten oder Heizbändern, erfolgt.

5. Verfahren, insbesondere nach einem der Ansprüche 1 bis 4, **dadurch gekennzeichnet, dass** der Bolzen (10), vorzugsweise in dessen mittigen Längsachse, gekühlt wird.

6. Vorrichtung, bestehend aus einem Bolzen (10) und einem Siebwechslergehäuse (1) mit einer Ausnehmung (5) zur Aufnahme des Bolzens (10), zur Durchführung des Verfahrens nach einem der Ansprüche 1 bis 3, , **dadurch gekennzeichnet, dass** der Bolzen (10) eine Kühleinheit (20) aufweist, welche vorzugsweise in einer mittigen Längsachse des Bolzen (10) angeordnet ist.

7. Vorrichtung, nach Anspruch 6, wobei mindestens eine Heizeinheit (4, 16) in einem äusseren Bereich (18) des Siebwechslergehäuses (1) angeordnet ist oder mindestens eine Heizeinheit (30, 31, 32) ausserhalb des äusseren Bereichs (18) und ausserhalb des Siebwechslergehäuses (1) angeordnet ist, wobei der äussere Bereich (18) des Siebwechslergehäuses (1) einerseits durch dessen äussere Oberfläche, anderseits durch eine Begrenzungsfläche (17) begrenzt wird, welche mittig zwischen der äusseren Oberfläche des Siebwechslergehäuses (1) und einer Wandung der Ausnehmung (5) verläuft.

8. Vorrichtung nach Anspruch 7, **dadurch gekennzeichnet, dass** die Heizeinheit entweder
- aus mindestens einer Heizplatte (30, 31),
- aus mindestens einem Heizband (32),
- aus mindestens einem ersten Kanalsystem (4) oder
- aus mindestens einer Heizpatrone (16)
besteht.

9. Vorrichtung nach Anspruch 6, **dadurch gekennzeichnet, dass** die Kühleinheit (20) aus mindestens einem weiteren Kanalsystem besteht, durch das ein Temperiermedium geleitet wird.

10. Vorrichtung nach einem der Ansprüche 6 bis 9, **dadurch gekennzeichnet, dass** im Siebwechslergehäuse (1) mindestens ein Transportkanal (3) zum Transport von Fördermedium enthalten ist, dass der bzw. die Bolzen (10) im wesentlichen quer zum mindestens einen Transportkanal (3) angeordnet sind und dass im bzw. in den Bolzen (10) mindestens ein Filterelement (12) zum Filtern des Fördermediums enthalten ist.

11. Vorrichtung nach Anspruch 10, **dadurch gekennzeichnet, dass** im Siebwechslergehäuse (1) eine zweite Heizeinheit (6) vorgesehen ist, welche im Bereich des mindestens einen Transportkanals (3) und/oder im Bereich der Ausnehmung (5) angeordnet ist.

## Claims

1. A method for removing a slide bar (10) locked in an aperture (5) of a housing (1) of a screen changer, the method comprising disengaging said slide bar (10) by momentarily supplying heat into an outer zone (18) of said housing (1) of the screen changer, whereby said outer zone (18) of the housing (1) of the screen changer is on the one hand delimited by its surface area and on the other hand by a delimiting surface (17) extending centrally between the surface area of the housing (1) of the screen changer and a wall of said aperture (5).

2. A method for inserting a slide bar (10) into an aperture (5) of a housing (1) of a screen changer, the method comprising inserting said slide bar (10) into said aperture (5) by momentarily supplying heat into an outer zone (18) of said housing (1) of the screen changer, whereby said outer zone (18) of the housing (1) of the screen changer is on the one hand delimited by its outer surface area and on the other hand by a delimiting surface (17) extending centrally between the outer surface area of the housing (1) of the screen changer and a wall of said aperture (5).

3. The method as claimed in any of claims 1 to 2, **characterized in that** the supply of heat is made by using a tempering medium conducted through a channel system (4) provided in said outer zone (18) or by means of heating units (16) arranged in said outer zone (18), comprising for example heating cartridges.

4. The method as claimed in any of claims 1 to 2, **characterized in that** the heat supply is made by means of heating units (30, 31, 32) arranged outside said outer zone (18) and outside of the housing (1) of the screen changer, comprising for example heating plates or heating bands.

5. The method as claimed in any of claims 1 to 4, **characterized in that** said slide bar (10) is cooled, preferably in its central longitudinal axis.

6. Apparatus, comprising a slide bar (10) and a screen changer housing (1) having an aperture (5) for taking up said slide bar (10), for carrying out the method as claimed in any of claims 1 to 3, **characterised in that** said slide bar (10) is provided with a cooling unit (20) which is preferably arranged in a central longitudinal axis of the slide bar (10).

7. The apparatus as claimed in claim 6, wherein at least one heating unit (4, 16) is arranged in an outer zone (18) of the screen changer housing (1) or wherein at least one heating unit (30, 31, 32) is arranged outside of the outer zone and outside of the screen changer housing (1), said outer zone (18) of the screen changer housing (1) being delimited on the one hand by its outer surface area and on the other hand by a delimiting surface (17) extending centrally between the outer surface area of the screen changer housing (1) and a wall of said aperture (5).

8. The apparatus as claimed in claim 7, **characterized in that** the heating unit comprises either
- at least one heating plate (30, 31),
- at least one heating band (32),
- at least a first channel system (4) or
- at least one heating cartridge (16).

9. The apparatus as claimed in claim 6, **characterized in that** the cooling unit (20) comprises at least one further channel system through which is conducted said tempering medium.

10. The apparatus as claimed in any of claims 6 to 9, **characterized in that** at least one transport channel (3) for transporting the transport medium is provided in said screen changer housing (1) further **in that** the slide bar or bars (10) respectively is/are arranged substantially transversely with respect to said at least one transport channel (3) and **in that** in the slide bar or bars (10) respectively is arranged at least one filtering element (12) for filtering said transport medium.

11. The apparatus as claimed in claim 10, **characterized in that** a second heating unit (6) is provided in said screen changer housing (1) arranged in the region of said at least one transport channel (3) and/or in the region of said aperture (5).

## Revendications

1. Procédé de désengagement d'un boulon (10) bloqué dans une ouverture (5) d'un boîtier (1) d'un changeur de filtre, le procédé étant **caractérisé en ce que** le boulon (10) est désengagé par apport momentané de chaleur dans une zone extérieure (18) dudit boîtier (1) du changeur de filtre, cette zone extérieure (18) du boîtier (1) du changeur de filtre étant délimitée d'une part par sa surface et d'autre part par une surface de délimitation (17) qui s'étend au centre entre la surface du boîtier (1) du changeur du filtre et une paroi de ladite ouverture (5).

2. Procédé d'insertion d'un boulon (10) dans une ouverture (5) d'un boîtier (1) d'un changeur de filtre, le procédé étant **caractérisé en ce que** le boulon (10) est introduit dans ladite ouverture (5) par un apport momentané de chaleur dans une zone extérieure (18)du boîtier (1) du changeur de filtre, cette zone extérieure (18) du boîtier (1) du changeur de filtre étant délimitée d'une part par sa surface extérieure et d'autre part par une surface de délimitation (17) qui s'étend au centre entre la surface extérieure de boîtier (1) du changeur de filtre et une paroi de ladite ouverture (5).

3. Procédé selon l'une des revendications 1 à 2, **caractérisé en ce que** l'apport de chaleur se fait à l'aide d'un milieu de tempérisation qui est conduit à travers un système de canaux (4) dans ladite zone extérieure (18), ou à l'aide d'unités de chauffage (16) disposées dans ladite zone extérieure (18), consistant par exemple en des cartouches de chauffage.

4. Procédé selon l'une des revendications 1 à 2, **caractérisé en ce que** l'apport de chaleur se fait à l'aide d'unités de chauffage (30, 31, 32) disposées en dehors de ladite zone extérieure (18) et à l'extérieure du boîtier (1) du changeur de filtre, consistant par exemple en des plaques de chauffage ou en des bandes de chauffage.

5. Procédé, notamment selon l'une des revendications 1 à 4, **caractérisé en ce que** le boulon (10) est refroidi de préférence dans son axe longitudinal central.

6. Dispositif, comprenant un boulon (10) et un boîtier (1) d'un changeur de filtre possédant une ouverture (5) pour recevoir ledit boulon (10), pour la mise en oeuvre du procédé selon l'une des revendications 1 à 3, **caractérisé en ce que** le boulon (10) comprend une unité de refroidissement (20) qui est disposée de préférence dans un axe longitudinal central du boulon (10).

7. Dispositif selon la revendication 6, dans lequel au moins une unité de chauffage (4, 16) est disposée dans une zone extérieure (18) du boîtier (1) du changeur de filtre ou au moins une unité de chauffage (30, 31, 32) est disposée en dehors de la zone extérieure (18) et à l'extérieure du boîtier (1) du changeur de filtre, ladite zone extérieure (18) du boîtier (1) du changeur de filtre (1) étant délimitée d'une part par sa surface extérieure et d'autre part par une surface de délimitation (17) qui s'étend au centre entre la surface extérieure du boîtier (1) du changeur de filtre et une paroi de ladite ouverture (5).

8. Dispositif selon la revendication 7, **caractérisé en ce que** l'unité de chauffage comprend soit
- au moins une plaque de chauffage (30, 31),
- au moins une bande de chauffage (32),
- au moins un premier système de canaux (4) ou
- au moins une cartouche de chauffage (16).

9. Dispositif selon la revendications 6, **caractérisé en ce que** l'unité de refroidissement (20) comprend au moins un autre système de canaux à travers lequel est conduit ledit milieu de tempérisation.

10. Dispositif selon l'une des revendications 6 à 9, **caractérisé en ce qu'**au moins un canal de transport (3) pour le transport d'un milieu de transport est prévu dans le boîtier (1) du changeur de filtre, **en ce que** le ou les boulons (10) sont disposés essentiellement transversalement par rapport audit au moins un canal de transport (3) et **en ce que** au moins un élément filtre (12) pour filtrer le milieu de transport est prévu dans le resp. les boulons (10).

11. Dispositif selon la revendications 10, **caractérisé en ce qu'**une seconde unité de chauffage (6) est prévue dans le boîtier du changeur de filtre, cette unité étant disposée dans la région dudit au moins un canal de transport (3) et / ou dans la région de ladite ouverture (5).
